(12) # EUROPÄISCHE PATENTSCHRIFT

(45) Veröffentlichungstag und Bekanntmachung des Hinweises auf die Patenterteilung:
**26.06.2019 Patentblatt 2019/26**

(51) Int Cl.:
*H01M 4/36* (2006.01)   *H01M 4/587* (2010.01)
*H01M 4/62* (2006.01)   *H01M 4/02* (2006.01)
*H01M 4/38* (2006.01)   *H01M 10/0525* (2010.01)

(21) Anmeldenummer: **16744431.4**

(22) Anmeldetag: **28.07.2016**

(86) Internationale Anmeldenummer:
**PCT/EP2016/068061**

(87) Internationale Veröffentlichungsnummer:
**WO 2017/025346 (16.02.2017 Gazette 2017/07)**

(54) **SILICIUMPARTIKEL ENTHALTENDE ANODENMATERIALIEN FÜR LITHIUM-IONEN-BATTERIEN**

ANODE MATERIALS FOR LITHIUM ION BATTERIES CONTAINING SILICON PARTICLE

MATERIAUX POUR ANODES DE BATTERIES A IONS LITHIUM CONTENANT DU SILICIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2015 DE 102015215415**

(43) Veröffentlichungstag der Anmeldung:
**20.06.2018 Patentblatt 2018/25**

(73) Patentinhaber: **Wacker Chemie AG**
**81737 München (DE)**

(72) Erfinder: **HAUFE, Stefan**
**85579 Neubiberg (DE)**

(74) Vertreter: **Ege, Markus et al**
**Wacker Chemie AG**
**Hanns-Seidel-Platz 4**
**81737 München (DE)**

(56) Entgegenhaltungen:
**DE-A1-102013 211 388   DE-A1-102013 215 257**

- **JIN H B ET AL: "The influence of mechanochemical activation on combustion synthesis of Si3N4", CERAMICS INTERNATIONAL, ELSEVIER, AMSTERDAM, NL, Bd. 34, Nr. 5, 24. April 2007 (2007-04-24) , Seiten 1267-1271, XP022666992, ISSN: 0272-8842, DOI: 10.1016/J.CERAMINT.2007.03.020 [gefunden am 2008-05-15]**
- **YOONHO KHANG ET AL: "Synthesis of Si nanoparticles with narrow size distribution by pulsed laser ablation", JOURNAL OF NANOPARTICLE RESEARCH ; AN INTERDISCIPLINARY FORUM FOR NANOSCALE SCIENCE AND TECHNOLOGY, KLUWER ACADEMIC PUBLISHERS, DO, Bd. 12, Nr. 4, 16. Juni 2009 (2009-06-16), Seiten 1349-1354, XP019793494, ISSN: 1572-896X**
- **ZHANG S S ET AL: "Study of the charging process of a LiCoO2-based Li-ion battery", JOURNAL OF POWER SOURCES, ELSEVIER SA, CH, vol. 160, no. 2, 6 October 2006 (2006-10-06), pages 1349-1354, XP027938188, ISSN: 0378-7753 [retrieved on 2006-10-06]**

**Beschreibung**

Die Erfindung betrifft Siliciumpartikel enthaltende Anodenmaterialien, deren Verwendung zur Herstellung von Lithium-Ionen-Batterien sowie die so erhältlichen Lithium-Ionen-Batterien.

Wiederaufladbare Lithium-Ionen-Batterien sind heute die praxistauglichen elektrochemischen Energiespeicher mit den höchsten gravimetrischen Energiedichten von beispielsweise bis zu 250 Wh/kg. Sie werden vor allem im Bereich der tragbaren Elektronik, für Werkzeuge und auch für elektrisch angetriebene Transportmittel, wie beispielsweise Fahrräder oder Automobile, genutzt. Insbesondere für die Anwendung in Automobilen ist es jedoch notwendig, die Energiedichte der Batterien weiter deutlich zu steigern, um höhere elektrische Reichweiten der Fahrzeuge zu erreichen.

Als Material für die negative Elektrode ("Anode") für Lithium-Ionen-Batterien ist gegenwärtig graphitischer Kohlenstoff weit verbreitet. Graphitischer Kohlenstoff erfährt beim Ein- und Auslagern von Lithium, d.h. beim Laden und Entladen der Batterie vorteilhafterweise nur geringe Volumenänderungen von beispielsweise im Bereich von 10 % für die Grenzstöchiometrie von $LiC_6$. Nachteilig ist jedoch seine relativ niedrige elektrochemische Kapazität von theoretisch höchstens 372 mAh pro Gramm Graphit, die nur etwa ein Zehntel der mit Lithiummetall theoretisch erreichbaren elektrochemischen Kapazität entspricht.

Seit langem wird deshalb nach alternativen Materialien für Anoden geforscht, insbesondere im Bereich von mit Lithium legierenden (Halb-)Metallen. Eine Herausforderung stellt hierbei häufig die große Volumenausdehnung während des Ein- oder Auslagerns des Lithiums in die Legierungs-bildenden (Halb)-metalle dar, die über 200 %, teilweise sogar bis zu 300 % beträgt.

Silicium bildet mit Lithium binäre elektrochemisch aktive Legierungen, die einen sehr hohen Lithiumgehalt aufweisen können. Das bekannte Maximum an Lithiumgehalt findet man bei $Li_{4.4}Si$, was einer sehr hohen theoretischen spezifischen Kapazität im Bereich von 4200 mAh pro Gramm Silicium entspricht. Nachteiligerweise ist die Ein- und Auslagerung von Lithium in Silicium mit einer sehr starken Volumenänderung verbunden, die 300 % erreichen kann. Diese Volumenausdehnung führt zu einer starken mechanischen Belastung der Kristallite, die schließlich zu deren Auseinanderbrechen führt. Dieser als elektrochemische Mahlung bezeichnete Prozess führt im Aktivmaterial und in der Elektrodenstruktur zu einem Verlust der elektrischen Kontaktierung und damit zur Zerstörung der Elektrode unter Kapazitätsverlust. Die Abnahme der Kapazität im Laufe mehrerer Lade- und Entladezyklen wird als Fading oder kontinuierlicher Kapazitätsverlust bezeichnet und ist in der Regel irreversibel. Beispielsweise ergeben Mischungen aus mikrometer-skaligem Silicium und Kohlenstoff entsprechende Elektroden und sehr hohe anfängliche Kapazitäten von bis über 2000 mAh/g, die jedoch ein ausgeprägtes Fading erleiden.

Zur Reduzierung der mechanischen Beanspruchung und damit zur Verhinderung der elektrochemischen Mahlung wurde vielfach der Einsatz von nanoskaligen Siliciumpartikeln für Anoden von Lithium-Ionen-Zellen empfohlen. Bezüglich Größe und Gestalt der nanoskaligen Siliciumpartikel wird in der Literatur in unterschiedlichste Richtungen gelehrt. So sind Anodenmaterialien auf Basis von nanoskaligen bzw. nanostrukturierten Siliciumpartikeln mit mittleren Partikelgrößen von beispielsweise < 0,2 $\mu$m vielfach beschrieben. Die EP 1730800 lehrt Elektrodenmaterial für Lithium-Ionen-Batterien, das nanoskalige Siliciumpartikel mit mittleren Primärpartikeldurchmessern von 5 bis 200 nm enthält, die zu Aggregaten mit Größen bis zu 1000 nm zusammengelagert sind. Auch die WO 2014/202529 empfiehlt nanoskalige Siliciumpartikel für Elektrodenmaterial für Lithium-Ionen-Batterien mit volumengewichteten Partikelgrößenverteilungen zwischen den Durchmesser-Perzentilen $d_{10} > 20$ nm und $d_{90} < 2000$ nm. Konkret offenbart sind beispielsweise $d_{10}$-Werte von 80 nm und 120 nm sowie $d_{50}$-Werte von 190 nm und 150 nm.

M. Gauthier diskutiert im Journal of Power Sources, 256, 2014, Seiten 32 bis 36 Anodenmaterial mit Siliciumpartikeln, die durch sehr breite, mehrmodale Größenverteilungen charakterisiert sind und beispielsweise nanoskalige Partikel im Bereich von 40 nm und erhebliche Anteile an grobteiligen Partikeln mit Durchmessern von >> 30 $\mu$m aufweisen. Die beschriebenen Halbzellen erreichen noch nicht die in der Praxis geforderte Coulomb-Effizienz. Elektrodenmaterialien enthaltend grobteilige Siliciumpartikel sind beispielsweise aus der US 2003235762 bekannt, die einen Gehalt an Siliciumpartikeln mit Partikeldurchmessern von 1 bis 10 $\mu$m von mindestens 60 Vol.-% haben. US 2003235762 verlautbart nichts über den Herstellprozess der Siliciumpartikel und damit auch nicht implizit die Kornform oder Sphärizität der Siliciumpartikel und insbesondere keine nicht-aggregierten Siliciumpartikel. Mit der für die Bestimmung von Partikeldurchmessern üblicherweise eingesetzten statischen Lichtstreuung sind aggregierte und nicht-aggregierte Siliciumpartikel nicht unterscheidbar. Das Aktivmaterial der US 2009305129 enthält Siliciumpartikel mit Kristallitgrößen von < 100 nm und Partikelgrößen von 7 bis 25 $\mu$m, die über Gasphasenprozesse hergestellt werden. Die DE 10 2013 211388 lehrt Anodenmaterial für Lithium-Ionen-Batterien, das Siliciumpartikel mit einer volumengewichteten Partikelgrößenverteilung zwischen den Durchmesser-Perzentilen $d_{10} > 0,02$ $\mu$m und $d_{90} < 2,0$ $\mu$m sowie einer Breite $d_{90}$-$d_{10}$ von < 1,2 $\mu$m haben, insbesondere $d_{10} > 0,04$ $\mu$m, $d_{90} < 0,5$ $\mu$m und eine Breite $d_{90}$-$d_{10}$ von < 0,3 $\mu$m. Konkret sind in DE 10 2013 211388 Siliciumpartikel mit einem $d_{10}$-Wert von 120 nm angegeben. Die DE 10 2013 215257 beschreibt mit Beispiel 5 ein Anodenmaterial, das einen Siliciumanteil von 20 Gew.-% hat, bezogen auf das Gesamtgewicht des Anodenmaterials. Die GB2498803 offenbart Anodenmaterial für Lithium-Ionen-Batterien basierend auf Siliciumpartikeln, Bindemitteln, Graphit und gegebenenfalls weiteren elektrisch leitenden Komponenten, wobei die Siliciumpartikel nicht aggregiert sind und eine volumengewichtete Partikelgrößenverteilung von beispielsweise $d_{10}$ = 6 $\mu$m, $d_{50}$ = 11 $\mu$m, $d_{90}$ = 20,0 $\mu$m und eine Breite $d_{90}$-$d_{10}$ von 14 $\mu$m haben, und wobei der Siliciumanteil im Anodenmaterial beispielsweise bei 70 Gew.-% liegt. Die Siliciumpartikel der Lithium-Ionen-Batterien der US 2005/0214646 haben mittlere Teilchendurchmesser von 1 $\mu$m. Bezüglich der Teilchengrößenverteilung und der Herstellung der Siliciumpartikel schweigt sich die US 2005/0214646 aus. Für das Anodenmaterial der beladenen Batterien wird in der US 2005/0214646 ein Lithium/Silicium-Verhältnis von höchstens 4,0 gefordert. Konkret beschrieben sind molare Li/Si-Verhältnisse von beispielsweise 3,5 und größer. Die JP 4911835 lehrt Li/Si-Verhältnisse für das Anodenmaterial geladener Lithium-Ionen-Batterien im Bereich von 2,3 und 4,0. Die US2003/113613 beschreibt Lithiumionen-Sekundärzellen mit kohlenstoffhaltigem Anodenmaterial und einem Verhältnis des Kathodenaktivmaterials zum Anodenaktivmaterial von 1,35 bis 2,25.

Bisher bekannte nanoskalige Siliciumpartikel führen in Lithium-Ionen-Batterien weiterhin zu hohen initialen sowie kontinuierlichen Kapazitätsverlusten. Grund hierfür ist die Volumenänderung der Siliciumpartikel beim Auf- und Entladen der Lithium-Ionen-Batterien und der damit verbundenen mechanischen Zermürbung der Anode. Zudem reagiert die Oberfläche des Silicium-Anodenmaterials mit Bestandteilen des Elektrolyten unter kontinuierlicher Bildung passivierender Schutzschichten (Solid Electrolyte Interface; SEI), was zu einer Immobilisierung von Lithium führt. Durch die Volumenänderung des Siliciums sind diese passivierenden Schutzschichten nur teilweise stabil, so dass bei jedem Lade-/Entladezyklus eine gewisse Menge Lithium immobilisiert wird. Da in der Vollzelle die Menge an mobilem Lithium, welches der nutzbaren Kapazität entspricht, durch das Kathodenmaterial begrenzt ist, ist dieses schnell verbraucht und die Kapazität der Zelle nach zu wenigen Zyklen abgebaut. Der Rückgang der reversiblen Kapazität der Lithium-Ionen-Batterien während der fortgesetzten Zyklen wird auch als Fading bezeichnet.

Vor diesem Hintergrund bestand die Aufgabe der vorliegenden Erfindung darin, ein Anodenmaterial für Lithium-Ionen-Batterien bereitzustellen, das in der Vollzelle eine hohe reversible Kapazität aufweist, wobei nach Möglichkeit gleichzeitig ein nur geringer irreversibler Kapazitätsverlust im ersten Zyklus und ein stabiles elektrochemisches Verhalten mit möglichst geringfügigem Fading in den Folgezyklen erreicht werden soll. Ein weiteres Ziel war es, Anodenmaterial für Lithium-Ionen-Batterien zur Verfügung zu stellen, das eine ausreichende mechanische Stabilität während des wiederholten Auf- und Entladens aufweist.

Überraschenderweise wurde die Aufgabe mit Anodenmaterial gelöst, das einen erfindungsgemäßen Siliciumanteil und nicht aggregierte Siliciumpartikel mit erfindungsgemäßer Partikelgrößenverteilung enthielt. Die Aufgabe konnte noch besser gelöst werden, wenn die mit erfindungsgemäßem Anodenmaterial hergestellten Lithium-Ionen-Batterien so betrieben wurden, dass das Anodenmaterial in der vollständig geladenen Batterie nur teilweise lithiiert war.

Ein Gegenstand der Erfindung ist ein Anodenmaterial für Lithium-Ionen-Batterien basierend auf Siliciumpartikeln, einem oder mehreren Bindemitteln, gegebenenfalls Graphit, gegebenenfalls einer oder mehreren weiteren elektrisch leitenden Komponenten und gegebenenfalls einem oder mehreren Additiven, dadurch gekennzeichnet, dass die Siliciumpartikel nicht aggregiert sind und eine volumengewichtete Partikelgrößenverteilung zwischen den Durch-messer-Perzentilen 10 $\mu$m $\geq$ $d_{10}$ $\geq$ 0,2 $\mu$m und $d_{90}$ $\leq$ 20,0 $\mu$m sowie $d_{50}$ von 0,5 bis 10,0 $\mu$m und eine Breite $d_{90}$-$d_{10}$ $\leq$ 15 $\mu$m haben (bestimmt durch statische Laserstreuung unter Anwendung des Mie-Modells mit dem Messgerät Horiba LA 950 mit Ethanol als Dispergiermedium für die Siliciumpartikel), wobei der Siliciumanteil im Anodenmaterial zwischen 40 Gew.-% und 95 Gew.-% liegt, bezogen auf das Gesamtgewicht des Anodenmaterials.

Ein weiterer Gegenstand der Erfindung ist die Verwendung des erfindungsgemäßen Anodenmaterials für die Herstellung von Lithium-Ionen-Batterien.

Ein weiterer Gegenstand der Erfindung sind Lithium-Ionen-Batterien umfassend eine Anode basierend auf erfindungsgemäßem Anodenmaterial.

Ein Anodenmaterial im Sinne der vorliegenden Erfindung ist ein Elektrodenmaterial, das auf einer Mischung aus mehreren Stoffen basiert, und das es erlaubt, durch Oxidations- oder Reduktionsreaktionen elektrochemische Energie in einer Batterie zu speichern beziehungsweise einer Batterie zu entnehmen. Das Elektrodenmaterial, das in der geladenen Batterie unter Ablauf einer oxidativen elektrochemischen Reaktion Energie liefert, wird als Anodenmaterial oder auch als negatives Elektrodenmaterial bezeichnet.

Die volumengewichtete Partikelgrößenverteilung der Siliciumpartikel liegt zwischen den Durchmesser-Perzen-tilen $d_{10}$ $\geq$ 0,2 $\mu$m und $d_{90}$ $\leq$ 20,0 $\mu$m, bevorzugt zwischen $d_{10}$ $\geq$ 0,2 $\mu$m und $d_{90}$ $\leq$ 10,0 $\mu$m und am meisten bevorzugt zwischen $d_{10}$ $\geq$ 0,2 $\mu$m bis $d_{90}$ $\leq$ 5,0 $\mu$m. Die Siliciumpartikel haben eine volumengewichtete Partikelgrößenverteilung mit Durchmesser-Perzentilen $d_{10}$ von $\leq$ 10 $\mu$m, bevorzugt $\leq$ 5 $\mu$m, noch mehr bevorzugt $\leq$ 3 $\mu$m und am meisten bevorzugt $\leq$ 1 $\mu$m. Die Siliciumpartikel haben eine volumengewichtete Partikelgrößenverteilung mit Durchmesser-Perzentilen $d_{90}$ von vorzugsweise $\geq$ 0,5 $\mu$m und besonders bevorzugt $\geq$ 5 $\mu$m.

Die volumengewichtete Partikelgrößenverteilung der Siliciumpartikel hat eine Breite $d_{90}$-$d_{10}$ von $\leq$ 15,0 $\mu$m, bevorzugt $\leq$ 12,0 $\mu$m, mehr bevorzugt $\leq$ 10,0 $\mu$m, besonders bevorzugt $\leq$ 8,0 $\mu$m und am meisten bevorzugt $\leq$ 4,0 $\mu$m. Die volumengewichtete Partikelgrößenverteilung der Siliciumpartikel hat eine Breite $d_{90}$-$d_{10}$ von vorzugsweise $\geq$ 0,6 $\mu$m, besonders bevorzugt $\geq$ 0,8 $\mu$m und am meisten bevorzugt $\geq$ 1,0 $\mu$m.

Die volumengewichtete Partikelgrößenverteilung der Siliciumpartikel weist Durchmesser-Perzentilen $d_{50}$ von

0,5 bis 10,0 $\mu$m, bevorzugt 0,6 bis 7,0 $\mu$m und am meisten bevorzugt 0,7 bis 3,0 $\mu$m auf.

Das Zweifache bis Fünffache, insbesondere das Zweifache bis Dreifache der vorgenannten $d_{50}$-Werte ist vorzugsweise kleiner als die Schichtdicke der Anodenbeschichtung. Die Schichtdicke der Anodenbeschichtung ist weiter unten angegeben. Diese Maßgabe ist hilfreich, um Überkorn praktisch auszuschließen.

Die volumengewichtete Partikelgrößenverteilung der Siliciumpartikel wird bestimmt durch statische Laserstreuung unter Anwendung des Mie-Modells mit dem Messgerät Horiba LA 950 mit Ethanol als Dispergiermedium für die Siliciumpartikel.

Die volumengewichtete Partikelgrößenverteilung der Siliciumpartikel ist vorzugsweise monomodal. Die volumengewichtete Partikelgrößenverteilung der Siliciumpartikel ist im Allgemeinen eng, wie aus den $d_{10}$- oder $d_{90}$-Werten sowie $d_{90}$-$d_{10}$-Werten zu ersehen ist.

Die Siliciumpartikel sind nicht aggregiert, vorzugsweise nicht agglomeriert und/oder vorzugsweise nicht nanostrukturiert. Aggregiert bedeutet, dass sphärische oder weitestgehend sphärische Primärpartikel, wie sie beispielsweise zunächst in Gasphasenprozessen bei der Herstellung der Siliciumpartikel gebildet werden, im weiteren Reaktionsverlauf des Gasphasenprozesses zu Aggregaten zusammenwachsen. Diese Aggregate können im weiteren Reaktionsverlauf Agglomerate bilden. Agglomerate sind eine lose Zusammenballung von Aggregaten. Agglomerate können mit typischerweise eingesetzten Knet- und Dispergierverfahren leicht wieder in die Aggregate aufgespalten werden. Aggregate lassen sich mit diesen Verfahren nicht oder nur teilweise in die Primärpartikel zerlegen. Aggregate und Agglomerate haben auf Grund ihrer Entstehung zwangsläufig ganz andere Sphärizitäten und Kornformen als die erfindungsgemäßen Siliciumpartikel. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen oder Partikeldurchmessern von Siliciumpartikeln können dagegen nicht zwischen Aggregaten oder Agglomeraten unterscheiden.

Nicht nanostrukturierte Siliciumpartikel haben im Allgemeinen charakteristische BET-Oberflächen. Die BET-Oberflächen der Siliciumpartikel betragen vorzugsweise 0,01 bis 30,0 m$^2$/g, mehr bevorzugt 0,1 bis 25,0 m$^2$/g, besonders bevorzugt 0,2 bis 20,0 m$^2$/g und am meisten bevorzugt 0,2 bis 18,0 m$^2$/g. Die BET-Oberfläche wird gemäß DIN 66131 (mit Stickstoff) bestimmt.

Die Siliciumpartikel haben eine Sphärizität von vorzugsweise $0,3 \leq \psi \leq 0,9$, besonders bevorzugt $0,5 \leq \psi \leq 0,85$ und am meisten bevorzugt $0,65 \leq \psi \leq 0,85$. Siliciumpartikel mit solchen Sphärizitäten werden insbesondere durch Herstellung mittels Mahlprozessen zugänglich. Die Sphärizität $\psi$ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die internationale Norm der "Federation Europeenne de la Manutention" gibt in der FEM 2.581 einen Überblick, unter welchen Gesichtspunkten ein Schüttgut zu betrachten ist. In der Norm FEM 2.582 werden die allgemeinen und spezifischen Schüttguteigenschaften hinsichtlich der Klassifizierung definiert. Kennwerte, die die Konsistenz und den Zustand des Gutes beschreiben sind zum Beispiel Kornform und Korngrößenverteilung (FEM 2.581 / FEM 2.582: General characteristics of bulk products with regard to their classification and their symbolization).

Nach DIN ISO 3435 können Schüttgüter in Abhängigkeit der Beschaffenheit der Kornkanten in 6 unterschiedliche Kornformen untergliedert werden:

I: scharfe Kanten mit ungefähr gleichen Ausmaßen in den drei Dimensionen (Bsp.: Würfel);
II: scharfe Kanten, deren eine deutlich länger ist als die anderen beiden (Bsp.: Prisma, Klinge);
III: scharfe Kanten, deren eine deutlich kleiner ist als die beiden anderen (Bsp.: Platte, Schuppen);
IV: runde Kanten mit ungefähr gleichen Ausmaßen in den drei Dimensionen (Bsp.: Kugel);
V: runde Kanten, in einer Richtung deutlich größer als in den anderen beiden (Bsp.: Zylinder, Stange);
VI: faserig, fadenförmig, lockenförmig, verschlungen.

Gemäß dieser Klassifizierung von Schüttgütern handelt es sich bei den Siliciumpartikeln, insbesondere bei den nach Mahlprozessen hergestellten Siliciumpartikeln, vorzugweise um Partikel der Kornformen I, II oder III.

Die Siliciumpartikel können aus elementarem Silicium, einem Siliciumoxid oder einer binären, ternären oder multinären Silicium/Metall-Legierung (mit beispielsweise Li, Na, K, Sn, Ca, Co, Ni, Cu, Cr, Ti, Al, Fe) bestehen. Bevorzugt wird elementares Silicium eingesetzt, insbesondere da dieses eine vorteilhaft hohe Speicherkapazität für Lithium-Ionen aufweist.

Unter elementarem Silicium ist hochreines Polysilicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, C) aufweisen kann, zu verstehen.

Falls die Siliciumpartikel ein Siliciumoxid enthalten, dann liegt die Stöchiometrie des Oxids SiO$_x$ bevorzugt im Bereich 0 < x < 1,3. Falls die Siliciumpartikel ein Siliciumoxid mit höherer Stöchiometrie enthalten, dann ist dessen Schichtdicke auf der Oberfläche bevorzugt kleiner als 10 nm.

Wenn die Siliciumpartikel mit einem Alkalimetall M legiert sind, dann liegt die Stöchiometrie der Legierung $M_ySi$ bevorzugt im Bereich $0 < y < 5$. Die Siliciumpartikel können gegebenenfalls prälithiiert sein. Für den Fall, dass die Siliciumpartikel mit Lithium legiert sind, liegt die Stöchiometrie der Legierung $Li_zSi$ bevorzugt im Bereich $0 < z < 2,2$.

Besonders bevorzugt sind Siliciumpartikel die im Inneren $\geq 80$ Mol-% Silicium und/oder $\leq 20$ Mol-% Fremdatome, ganz besonders bevorzugt $\leq 10$ Mol-% Fremdatome enthalten.

Die Oberfläche der Siliciumpartikel kann gegebenenfalls durch eine Oxidschicht oder durch andere anorganische und organische Gruppen abgedeckt sein. Besonders bevorzugte Siliciumpartikel tragen auf der Oberfläche Si-OH- oder Si-H-Gruppen oder kovalent angebundene organische Gruppen, wie beispielsweise Alkohole oder Alkene. Durch die organischen Gruppen kann beispielsweise die Oberflächenspannung der Siliciumpartikel gesteuert werden und insbesondere an die Lösemittel oder Bindemittel angepasst werden, die gegebenenfalls bei der Herstellung der Anodenbeschichtungen eingesetzt werden.

Die Lithium-Ionen-Batterien sind vorzugsweise so aufgebaut und/oder werden vorzugsweise so betrieben, dass das Anodenmaterial in der vollständig geladenen Batterie nur teilweise lithiiert ist. Vollständig geladen bezeichnet den Zustand der Batterie, in dem das Anodenmaterial der Batterie ihre höchste Beladung an Lithium aufweist. Teilweise Lithiierung des Anodenmaterials bedeutet, dass das maximale Lithiumaufnahmevermögen der Siliciumpartikel im Anodenmaterial nicht ausgeschöpft wird. Das maximale Lithiumaufnahmevermögen der Siliciumpartikel entspricht der Formel $Li_{4,4}Si$ und beträgt somit 4,4 Lithiumatome pro Siliciumatom, was einer maximalen spezifischen Kapazität von 4200 mAh pro Gramm Silicium entspricht.

Die vorliegende Erfindung betrifft somit auch Verfahren zum Betreiben von Lithium-Ionen-Batterien, dadurch gekennzeichnet, dass das Anodenmaterial in der vollständig geladenen Lithium-Ionen-Batterie nur teilweise lithiiert ist.

Das Verhältnis der Lithiumatome zu den Siliciumatomen in der Anode einer Lithium-Ionen-Batterie (Li/Si-Verhältnis) kann beispielsweise über den elektrischen Ladungsfluss eingestellt werden. Der Lithiierungsgrad des Anodenmaterials beziehungsweise der im Anodenmaterial enthaltenen Siliciumpartikel ist proportional zur geflossenen elektrischen Ladung. Bei dieser Variante wird beim Laden der Lithium-Ionen-Batterie die Kapazität des Anodenmaterials für Lithium nicht voll ausgeschöpft. Dies resultiert in einer teilweisen Lithiierung der Anode.

Bei einer alternativen, bevorzugten Variante wird das Li/Si-Verhältnis einer Lithium-Ionen-Batterie durch das Zellbalancing eingestellt. Hierbei werden die Lithium-Ionen-Batterien so ausgelegt, dass das Lithiumaufnahmevermögen der Anode vorzugsweise größer ist als das Lithiumabgabevermögen der Kathode. Dies führt dazu, dass in der vollständig geladenen Batterie das Lithiumaufnahmevermögen der Anode nicht voll ausgeschöpft ist, d.h. dass das Anodenmaterial nur teilweise lithiiert ist.

Bei der erfindungsgemäßen teilweisen Lithiierung beträgt das Li/Si-Verhältnis im Anodenmaterial im vollständig geladenen Zustand der Lithium-Ionen-Batterie vorzugsweise $\leq 2,2$, besonders bevorzugt $\leq 1,98$ und am meisten bevorzugt $\leq 1,76$. Das Li/Si-Verhältnis im Anodenmaterial im vollständig geladenen Zustand der Lithium-Ionen-Batterie ist vorzugsweise $\geq 0,22$, besonders bevorzugt $\geq 0,44$ und am meisten bevorzugt $\geq 0,66$.

Die Kapazität des Siliciums des Anodenmaterials der Lithium-Ionen-Batterie wird vorzugsweise zu $\leq 50\%$, besonders bevorzugt zu $\leq 45\%$ und am meisten bevorzugt zu $\leq 40\%$ genutzt, bezogen auf eine Kapazität von 4200 mAh pro Gramm Silicium.

Der Lithiierungsgrad von Silicium beziehungsweise die Ausnutzung der Kapazität von Silicium für Lithium (Si-Kapazitätsnutzung $\alpha$) kann beispielsweise an Hand folgender Formel bestimmt werden:

$$\alpha = \frac{\beta}{\gamma \cdot FG \cdot \omega_{Si}}$$

$\beta$: Delithiierungs-Kapazität der Si-haltigen Anode bei der jeweiligen Ladeschlussspannung der Lithium-Ionen-Batterie;

$\gamma$: maximale Kapazität von Silicium für Lithium bei einer Stöchiometrie von $Li_{22}Si_5$ (entspricht 4200 mAh/g);

FG: Flächengewicht der Anodenbeschichtung;

$\omega_{Si}$: Si-Gewichtsanteil in der Anodenbeschichtung.

Bestimmung der Delithiierungs-Kapazität $\beta$:

Zuerst wird die Lithium-Ionen-Batterie in den elektrisch geladenen Zustand überführt, indem sie nach dem cc-Verfahren (constant current) mit konstantem Strom von 5 mA/g (entspricht C/25) bis zum Erreichen der Spannungsgrenze von 4,2 V geladen wird. Hierbei wird die Anode lithiiert.

Die so geladene Lithium-Ionen-Batterie wird geöffnet, die Anode entnommen und mit dieser eine Knopf-Halbzelle (Typ CR2032, Hohsen Corp.) mit Lithium-Gegenelektrode (Rockwood Lithium, Dicke 0,5 mm, Dm = 15 mm) aufgebaut. Ein mit 120 µl Elektrolyt getränktes, Glasfaser-Filterpapier (Whatman, GD Type D) kann als als Separator (Dm = 16 mm) dienen. Als Elektrolyt wird eine 1,0-molare Lösung von Lithiumhexafluorophosphat in einem 3:7 (v/v) Gemisch von Fluorethylencarbonat und Ethylmethylcarbonat eingesetzt, welche mit 2,0 Gew.-% Vinylencarbonat versetzt ist. Der Bau der Zelle erfolgt im Allgemeinen in einer Glovebox (< 1 ppm an $H_2O$ und $O_2$). Der Wassergehalt der Trockenmasse aller Einsatzstoffe liegt vorzugsweise unterhalb von 20 ppm.

Die Delithiierungs-Kapazität β der Si-haltigen Anodenbeschichtung wird bestimmt durch Laden der so hergestellten Knopf-Halbzelle (Arbeitselektrode = positive Elektrode = Si-Anode; Gegenelektrode = negative Elektrode = Lithium) mit C/25 bis Erreichen der Spannungsgrenze von 1,5 V. Die elektrochemischen Messungen an Voll- und Halbzelle werden bei 20°C durchgeführt. Der oben genannte konstante Strom bezieht sich auf das Gewicht der Beschichtung der positiven Elektrode.

Bestimmung des Si-Gewichtsanteils $\omega_{Si}$ :

Aus einer Probe der vollständig delithiierten Anodenbeschichtung (ohne Cu-Folie) wird zunächst Elektrolyt mit Tetrahydrofuran ausgewaschen. Anschließend wird eine Probe sauer aufgeschlossen. Dazu werden 75 mg der Anodenbeschichtung in ein Mikrowellenaufschlussgefäß (100 ml TFM-Liner von Anton-Paar) überführt und mit 5 ml $HNO_3$ (65%ig, p.a.), 0,25 ml HCl (37%ig, p.a.) und 1 ml HF (40%ig, suprapur) versetzt. Das Mikrowellenaufschlussgefäß wird verschlossen, in ein Mikrowellengerät (Multiwave 3000 Anton Paar) gegeben und für 45 min bei 950 W behandelt. Der Aufschluss wird vollständig in 50 ml Tubes überführt und mit Wasser auf 50 ml aufgefüllt. Davon werden 0,50 ml entnommen, mit 2,50 ml 4%iger Borsäure versetzt und wieder auf 50 ml aufgefüllt (Verdünnung: Faktor 100). Der Si-Gewichtsanteil $\omega_{Si}$ wird bestimmt mittels ICP-OES (inductively coupled plasma)-Emissionspektrometrie (Messgerät: Optima 7300 DV, Fa. Perkin Elmer; Probeneinführungssystem: Zerstäuber Meinhard mit Zyklonsprühkammer; Kalibrierbereich: 0,1 bis 20,0 mg/l Si; Si-Standard-Stammlösung Certipur von Merck mit 1000 mg/l Si (zertifiziert)).

Der Siliciumanteil im Anodenmaterial liegt zwischen 40 Gew.-% und 95 Gew.-%, besonders bevorzugt zwischen 50 Gew.-% und 90 Gew.-% und am meisten bevorzugt zwischen 60 Gew.-% und 80 Gew.-%, bezogen auf das Gesamtgewicht des Anodenmaterials.

Die Siliciumpartikel können beispielsweise durch Mahlprozesse hergestellt werden. Die geläufige Gasphasenabscheidung ist dagegen im Allgemeinen ungeeignet zur Herstellung erfindungsgemäß ausgestalteter Siliciumpartikel.

Durch Mahlprozesse sind Siliciumpartikel mit den erfindungsgemäßen Eigenschaften zugänglich, beispielsweise mit vorteilhaften Sphärizitäten, wie den in der Anwendung vorteilhaften Bruchflächen, insbesondere scharfkantigen Bruchflächen, oder beispielsweise splitterförmige Siliciumpartikel. Auch die erfindungswesentlichen Partikelgrößenverteilungen der Siliciumpartikel und nicht-aggregierte Siliciumpartikel sind durch Mahlprozesse sehr gut zugänglich.

Durch Gasphasenprozesse hergestellte Siliciumpartikel haben dagegen im Allgemeinen eine runde oder nadelförmige Gestalt. Bei der Gasphasenabscheidung kommt es typischerweise zur Aggregation der Partikel. Um nicht-aggregierte Siliciumpartikel mittels Gasphasenprozessen herzustellen, müssten die Gasphasenreaktoren mit extrem niedrigen Gaskonzentrationen oder extrem kurzen Reaktorverweilzeiten betrieben werden, was aber die Bildung von Siliciumpartikeln mit der erfindungsgemäßen p-skaligen Partikelgröße konterkariert und zu technisch unrentablen Produktionszeiten führt. Wenn dagegen aggregierte Siliciumpartikel akzeptabel sind, sind Gasphasenprozesse bestens geeignet für die Herstellung µ-skaliger Si-Aggregate mit Primärpartikelgröße im Nanometerbereich.

Als Mahlprozesse kommen beispielsweise Trocken- oder Nassmahlprozesse in Betracht. Hierbei werden vorzugsweise Planetenkugelmühlen, Strahlmühlen, wie Gegenstrahl oder Prallmühlen, oder Rührwerkskugelmühlen eingesetzt.

Die Vermahlung in der Strahlmühle erfolgt bevorzugt mit Stickstoff oder Edelgasen, wie bevorzugt Argon, als Mahlgas. Die Strahlmühlen weisen bevorzugt einen integrierten Windsichter auf, der statisch oder dynamisch ausgebildet sein kann, oder sie werden im Kreislauf mit einem externen Windsichter betrieben.

Für das Mahlen zur Herstellung der Siliciumpartikel in Suspension können ein oder mehrere organische oder anorganische Flüssigkeiten oder flüssige Gemische verwendet werden. Vorzugsweise haben solche Flüssigkeiten oder flüssigen Gemische bei Raumtemperatur eine Viskosität von bevorzugt unter 100 mPas und besonders bevorzugt unter 10 mPas. Bevorzugt sind die Flüssigkeiten oder flüssigen Gemische inert oder schwach reaktiv gegenüber Silicium. Besonders bevorzugt ist die Flüssigkeit organisch und enthält weniger als 5 Gew.-% Wasser, besonders bevorzugt weniger als 1 Gew.-% Wasser. Als organische Flüssigkeiten sind Kohlenwasserstoffe, Ester oder insbesondere Alkohole bevorzugt. Die Alkohole enthalten vorzugsweise 1 bis 7 und besonders bevorzugt 2 bis 5 Kohlenstoffatome. Beispiele für Alkohole sind Methanol, Ethanol, Propanol und Butanol. Bevorzugt sind Ethanol und 2-Propanol. Kohlenwasserstoffe enthalten vorzugsweise 5 bis 10 und besonders bevorzugt 6 bis 8 Kohlenstoffatome. Kohlenwasserstoffe können beispielsweise aliphatisch oder aromatisch sein. Beispiele für Kohlenwasserstoffe sind Toluol und Heptan. Bei Estern handelt es sich im Allgemeinen um Ester von Carbonsäuren und Alkylalkoholen, wie beispielsweise Ethylacetat.

Bei der Herstellung der Siliciumpartikel durch Nassvermahlung in einer Suspension werden vorzugsweise Mahlkörper verwendet, deren mittlerer Durchmesser 10 bis 1000 mal größer ist als der $d_{90}$-Wert der Verteilung des eingesetzten Mahlguts. Besonders bevorzugt sind Mahlkörper, deren mittlerer Durchmesser 20 bis 200-mal größer ist als der $d_{90}$-Wert der Ausgangsverteilung des Mahlguts.

Das Anodenmaterial basiert auf einer Mischung enthaltend den erfindungsgemäßen Siliciumanteil und umfassend erfindungsgemäße Siliciumpartikel, ein oder mehrere Bindemittel, gegebenenfalls Graphit, gegebenenfalls ein oder mehrere weitere elektrisch leitende Komponenten und gegebenenfalls ein oder mehrere Additive.

Durch Einsatz von weiteren elektrisch leitenden Komponenten im Anodenmaterial können die Übergangswiderstände innerhalb der Elektrode und zwischen Elektrode und Stromableiter reduziert werden, was die Strombelastbarkeit der Lithium-Ionen-Batterie verbessert. Bevorzugte weitere elektrisch leitende Komponenten sind Leitruß, Kohlenstoff-Nanoröhrchen oder metallische Partikel, beispielsweise Kupfer.

Die weiteren elektrisch leitenden Komponenten haben vorzugsweise nanoskalige Strukturen von $\leq$ 800 nm. Die Primärpartikel von Leitruß haben vorzugsweise eine volumengewichtete Partikelgrößenverteilung zwischen den Durchmesser-Perzentilen $d_{10}$ = 5 nm und $d_{90}$ = 200 nm. Die Primärpartikel von Leitruß können auch kettenartig verzweigt sein und bis zu pm-große Strukturen bilden. Kohlenstoff-Nanoröhrchen haben vorzugsweise Durchmesser von 0,4 bis 200 nm, besonders bevorzugte 2 bis 100 nm und am meisten bevorzugt 5 bis 30 nm. Die metallischen Partikel haben eine volumengewichtete Partikelgrößenverteilung, die zwischen den Durchmesser-Perzentilen $d_{10}$ = 5 nm und $d_{90}$ = 800 nm liegt.

Das Anodenmaterial enthält vorzugsweise 0 bis 40 Gew.-%, besonders bevorzugt 0 bis 30 Gew.-% und am meisten bevorzugt 0 bis 20 Gew.-% an einer oder mehreren weiteren elektrisch leitenden Komponenten, bezogen auf das Gesamtgewicht des Anodenmaterials.

Bevorzugte Bindemittel sind Polyacrylsäure oder deren Alkali-, insbesondere Lithium- oder Natrium-Salze, Polyvinylalkohole, Cellulose oder Cellulosederivate, Polyvinylidenfluorid, Polytetrafluorethylen, Polyolefine, Polyimide, insbesondere Polyamidimide, oder thermoplastische Elastomere, insbesondere Ethylen-Propylen-Dien-Terpolymere. Besonders bevorzugt sind Polyacrylsäure, Polymethacrylsäure oder Cellulose-Derivate, insbesondere Carboxymethylcellulose. Besonders bevorzugt sind auch die Alkali-, insbesondere Lithium- oder Natrium-Salze, der vorgenannten Bindemittel. Am meisten bevorzugt sind die AlkaliSalze, insbesondere Lithium- oder Natrium-Salze, der Polyacrylsäure oder der Polymethacrylsäure. Es können sämtliche oder vorzugsweise ein Anteil der Säure-Gruppen eines Bindemittels in Form von Salzen vorliegen. Die Bindemittel haben eine Molmasse von vorzugsweise 100.000 bis 1.000.000 g/mol. Es können auch Gemische von zwei oder mehr Bindemitteln eingesetzt werden.

Als Graphit kann allgemein natürlicher oder synthetischer Graphit eingesetzt werden. Die Graphitpartikel haben bevorzugt eine volumengewichtete Partikelgrößenverteilung zwischen den Durchmesser-Perzentilen $d_{10}$ > 0,2 $\mu$m und $d_{90}$ < 200 $\mu$m.

Beispiele für Additive sine Porenbildner, Dispergiermittel, Verlaufsmittels oder Dotiermittel, beispielsweise elementares Lithium.

Bevorzugte Rezepturen für das Anodenmaterial der Lithium-Ionen-Batterien enthalten vorzugsweise 60 bis 85 Gew.-% Siliciumpartikel; 0 bis 40 Gew.-%, insbesondere 0 bis 20 Gew.-% weitere elektrisch leitende Komponenten; 0 bis 80 Gew.-%, insbesondere 5 bis 30 Gew.-% Graphit; 0 bis 25 Gew.-%, insbesondere 5 bis 15 Gew.-% Bindemittel; und gegebenenfalls 0 bis 80 Gew.-%, insbesondere 0,1 bis 5 Gew.-% Additive; wobei sich die Angaben in Gew.-% auf das Gesamtgewicht des Anodenmaterials beziehen und sich die Anteile aller Bestandteile des Anodenmaterials auf 100 Gew.-% aufsummieren.

In einer bevorzugten Rezeptur für das Anodenmaterial ist der Anteil von Graphitpartikeln und weiteren elektrisch leitenden Komponenten in Summe mindestens 10 Gew.-%, bezogen auf das Gesamtgewicht des Anodenmaterials.

Die Verarbeitung der Bestandteile des Anodenmaterials zu einer Anodentinte bzw. -paste kann beispielsweise in einem Lösungsmittel, wie Wasser, Hexan, Toluol, Tetrahydrofuran, N-Methylpyrrolidon, N-Ethylpyrrolidon, Aceton, Ethylacetat, Dimethylsulfoxid, Dimethylacetamid oder Ethanol, oder Lösungsmittelgemischen vorzugsweise unter Verwendung von Rotor-Stator-Maschinen, Hochenergiemühlen, Planetenknetern, Rührwerkskugelmühlen, Rüttelplatten oder Ultraschallgeräten erfolgen.

Die Anodentinte bzw. -paste weist einen pH-Wert auf von vorzugsweise 2 bis 7,5 (bestimmt bei 20°C, beispielsweise mit dem pH-Meter von WTW pH 340i mit Sonde SenTix RJD).

Die Anodentinte oder -paste kann beispielsweise auf eine Kupferfolie oder einen anderen Stromsammler aufgerakelt werden. Andere Beschichtungsverfahren, wie z.B. Rotationsbeschichtung (Spin-Coating), Rollen-, Tauch- oder Schlitzdüsenbeschichtung, Streichen oder Sprühen, können ebenso verwendet werden.

Die Schichtdicke, das heißt die Trockenschichtdicke der Anodenbeschichtung ist bevorzugt 2 $\mu$m bis 500 $\mu$m, besonders bevorzugt von 10 $\mu$m bis 300 $\mu$m.

Vor dem Beschichten der Kupferfolie mit dem erfindungsgemäßen Anodenmaterial kann eine Behandlung der Kupferfolie mit einem handelsüblichen Primer, beispielsweise auf der Basis von Polymerharzen oder Silanen erfolgen. Primer können zu einer Verbesserung der Haftung auf dem Kupfer führen, besitzen aber selbst im Allgemeinen praktisch keine elektrochemische Aktivität.

Das Anodenmaterial wird im Allgemeinen bis zur Gewichtskonstanz getrocknet. Die Trocknungstemperatur richtet sich nach den eingesetzten Komponenten und dem verwendeten Lösungsmittel. Sie liegt bevorzugt zwischen 20°C und 300°C, besonders bevorzugt zwischen 50°C und 150°C.

Abschließend können die Elektrodenbeschichtungen kalandriert werden, um eine definierte Porosität einzustellen.

Eine Lithium-Ionen-Batterie umfasst im Allgemeinen eine erste Elektrode als Kathode, eine zweite Elektrode als Anode, eine zwischen beiden Elektroden angeordnete Membran als Separator, zwei elektrisch leitende Anschlüsse an den Elektroden, ein die genannten Teile aufnehmendes Gehäuse sowie einen Lithium-Ionen enthaltenden Elektrolyten, mit dem der Separator und die beiden Elektroden getränkt sind, wobei ein Teil der zweiten Elektrode das erfindungsgemäße Anodenmaterial enthält.

Als bevorzugte Kathodenmaterialien können Lithiumcobaltoxid, Lithiumnickeloxid, Lithiumnickelcobaltoxid (dotiert oder nicht dotiert), Lithiummanganoxid (Spinell), Lithiumnickelcobaltmanganoxide, Lithiumnickelmanganoxide, Lithiumeisenphosphat, Lithiumcobaltphosphat, Lithiummanganphosphat, Lithiumvanadiumphosphat, oder Lithiumvanadiumoxide eingesetzt werden.

Der Separator ist im Allgemeinen eine elektrisch isolierende, für Ionen durchlässige Membran, wie sie in der Batterieherstellung gebräuchlich ist. Der Separator trennt bekanntermaßen die erste Elektrode von der zweiten Elektrode und verhindert somit elektronisch leitende Verbindungen zwischen den Elektroden (Kurzschluss).

Der Elektrolyt ist üblicherweise eine Lösung eines Lithiumsalzes (= Leitsalz) in einem aprotischen Lösungsmittel. Einsetzbare Leitsalze sind zum Beispiel Lithiumhexafluorophosphat, Lithiumhexafluoroarsenat, Lithiumperchlorat, Lithiumtetrafluoroborat, $LiCF_3SO_3$, $LiN(CF_3SO_2)$ oder Lithiumborate. Die Konzentration des Leitsalzes, bezogen auf das Lösungsmittel, liegt vorzugsweise zwischen 0,5 mol/l und der Löslichkeitsgrenze des entsprechenden Salzes. Besonders bevorzugt beträgt sie 0,8 mol/l bis 1,2 mol/l.

Als Lösungsmittel können cyclische Carbonate, Propylencarbonat, Ethylencarbonat, Fluorethylencarbonat, Dimethylcarbonat, Diethylcarbonat, Ethylmethylcarbonat, Dimethoxyethan, Diethoxyethan, Tetrahydrofuran, 2-Methyltetrahydrofuran, gamma-Butyrolacton, Dioxolan, Acetonitril, organische Kohlensäureester oder Nitrile, einzeln oder als Mischungen daraus, eingesetzt werden.

Bevorzugt enthält der Elektrolyt einen Filmbildner, wie Vinylencarbonat oder Fluorethylencarbonat. Dadurch kann eine signifikante Verbesserung der Zyklenfestigkeit der erfindungsgemäßen, Siliciumpartikel enthaltenden Anode erreicht werden. Dies wird hauptsächlich der Bildung einer festen Elektrolytzwischenphase auf der Oberfläche von aktiven Partikeln zugeschrieben. Der Anteil des Filmbildners im Elektrolyten beträgt bevorzugt zwischen 0,1 Gew.-% und 20,0 Gew.-%, besonders bevorzugt zwischen 0,2 Gew.-% und 15,0 Gew.-% und am meisten bevorzugt zwischen 0,5 Gew.-% und 10 Gew.-%.

Um die faktischen Kapazitäten der Elektroden einer Lithium-Ionen-Zelle möglichst optimal aufeinander abzustimmen, wird versucht, die Materialien für die positive und negative Elektrode mengenmäßig auszubalancieren. Von besonderer Bedeutung ist in diesem Zusammenhang, dass es beim ersten bzw. initialen Lade-/Entladezyklus von sekundären Lithium-Ionen-Zellen (der sogenannten Formierung) zur Ausbildung einer Deckschicht auf der Oberfläche der elektrochemisch aktiven Materialien in der Anode kommt. Diese Deckschicht wird als "Solid Elektrolyte Interphase" (SEI) bezeichnet und besteht in der Regel vor allem aus Elektrolytzersetzungsprodukten sowie einer gewissen Menge an Lithium, das entsprechend für weitere Lade-/Entladereaktionen nicht mehr zur Verfügung steht. Die Dicke und Zusammensetzung der SEI ist abhängig von der Art und der Qualität des verwendeten Anodenmaterials und der verwendeten Elektrolytlösung.

Die SEI ist im Falle von Graphit besonders dünn. Auf Graphit kommt es im ersten Ladeschritt zu einem Verlust von üblicherweise 5% bis 35% des mobilen Lithiums. Dementsprechend sinkt auch die reversible Kapazität der Batterie.

Bei Anoden mit dem erfindungsgemäßen Anodenmaterial kommt es im ersten Ladeschritt zu einem Verlust an mobilem Lithium von vorzugsweise ≤ 30%, besonders bevorzugt ≤ 20% und am meisten bevorzugt ≤ 10%.

Die erfindungsgemäße Lithium-Ionen-Batterie kann in allen üblichen Formen, beispielsweise in gewickelter, gefalteter oder gestapelter Form hergestellt werden.

Alle zur Herstellung der erfindungsgemäßen Lithium-Ionen-Batterie, wie oben beschrieben, benutzten Stoffe und Materialien sind bekannt. Die Herstellung der Teile der erfindungsgemäßen Batterie und ihre Zusammenfügung zur erfindungsgemäßen Batterie erfolgt nach den auf dem Gebiet der Batterieherstellung bekannten Verfahren.

Überraschenderweise führen die erfindungsgemäßen Anodenmaterialien zu Lithium-Ionen-Batterien mit verbessertem Zyklenverhalten. So können Lithium-Ionen-Batterien mit geringem irreversiblem Kapazitätsverlust im ersten Ladezyklus und einem stabilen elektrochemischen Verhalten mit nur geringfügigem Fading in den Folgezyklen hergestellt werden. Insbesondere wird auch der initiale, aus der Zersetzung von Elektrolyt an der Aktivmaterialoberfläche bei erstmaliger Lithiierung unter Schutzschichtbildung (= Solid Electrolyte Interface, SEI) resultierende Lithium-Verlust reduziert. Es können initiale Kapazitätsverluste erreicht werden, die mit dem Graphit-Standard vergleichbar sind.

Das Zyklenverhalten kann weiter verbessert werden, indem die Lithium-Ionen-Batterien so betrieben werden, dass die Siliciumpartikel enthaltenden Anoden in der vollständig geladenen Batterie nur teil-lithiiert sind. Auch dadurch wird die SEI und die mechanische Beanspruchung von Material reduziert, so dass das Fading noch weiter reduziert und die reversible Kapazität gesteigert werden kann. Insgesamt wird dadurch der kontinuierliche Verlust reduziert und die Zyklenfestigkeit der Lithium-Ionen-Batterien verbessert.

Mit der erfindungsgemäßen Vorgehensweise kann also der initiale sowie der kontinuierliche Kapazitätsverlust von Si-basierten Anodenmaterialien minimiert werden. Insgesamt weisen das erfindungsgemäße Anodenmaterial und die erfindungsgemäßen Lithium-Ionen-Batterien eine sehr gute Stabilität auf. Dies bedeutet, dass auch bei einer Vielzahl an Zyklen kaum Ermüdungserscheinungen, wie beispielsweise in Folge von mechanischer Zerstörung des erfindungsgemäßen Anodenmaterials auftreten, die zu einem Kapazitätsverlust führen.

Überraschenderweise können mit der erfindungsgemäßen Vorgehensweise Lithium-Ionen-Batterien erhalten werden, die neben dem vorgenannten vorteilhaften Zyklenverhalten zugleich noch eine hohe volumetrische Energiedichte besitzen.

Die nachfolgenden Beispiele dienen zur weiteren Erläuterung der Erfindung:

Beispiel 1:

Herstellung von nicht-aggregierten, splitterförmigen, sub-$\mu$m großen Siliciumpartikeln durch Mahlung:
Es wurde eine Mischung aus 2 kg Ethanol (Reinheit 99 %) und 500 g reines Silicium mit einer Partikelverteilung mit $d_{10}$ = 8 $\mu$m, $d_{50}$ = 15 $\mu$m und $d_{90}$ = 25 $\mu$m, der mit einer Fließbettstrahlmühle aus gröberen Partikeln erzeugt wurde, hergestellt und 20 min gerührt, bis der gesamte Feststoff in der Suspension fein verteilt vorlag.

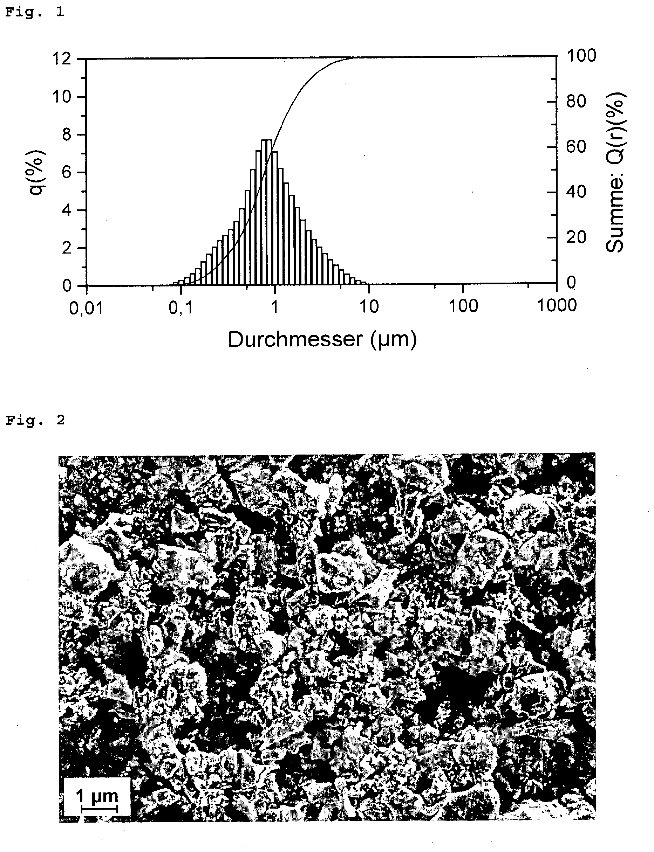

Der Mahlraum einer Labor-Rührwerkskugelmühle Netzsch LabStar LS1 mit Mahlsystem ZETA Keramik wurde mit 490 ml Yttriumoxidstabilisierten Zirkonoxid-Mahlperlen mit einem mittleren Durchmesser von 0,3 mm befüllt und verschlossen. Danach wurde die Suspension aus Siliciumstaub und Ethanol in den gekühlten Ansatzbehälter der Mühle gefüllt und mit einem Durchsatz von 40 kg/h im Kreis durch die Mühle gepumpt. Die Partikel in der Suspension wurden 55 min bei einer Mühlendrehzahl von 3000 U/min gemahlen. Nach dem Mahlvorgang wurde der Suspension Ethanol zugesetzt, bis ihre Feststoffkonzentration 21,8 Gew.-% betrug. Die Messung der Partikelverteilung durch statische Laserstreuung unter Anwendung des Mie-Modells mit einem Horiba LA 950 in einer stark verdünnten Suspension in Ethanol ergab $d_{10}$ = 0,26 $\mu$m, $d_{50}$ = 0,79 $\mu$m und $d_{90}$ = 2,30 $\mu$m sowie eine Breite ($d_{90}$-$d_{10}$) von 2,0 $\mu$m, wie in Fig. 1 abgebildet.

5 ml der Suspension wurden 16 h in einem Vakuumtrockenschrank bei 120°C und 20 mbar getrocknet.

Die REM-Aufnahme des trockenen Si-Staubs in Fig. 2 zeigt, dass die Probe aus einzelnen, nicht aggregierten, splitterförmigen Partikeln besteht.

Beispiel 2:

Herstellung einer erfindungsgemäßen Anode mit den Siliciumpartikeln aus Beispiel 1, Graphit und Binder durch physikalische Mischung:
11,0 g der 21,8 Gew.-%igen Si-Suspension in Ethanol aus Beispiel 1 wurden in 12,52 g einer 1,4 Gew.-%igen Lösung von Natrium-Carboxymethylcellulose (Daicel, Grade 1380) in Wasser mittels Dissolver bei einer Umlaufgeschwindigkeit von 4,5 m/s für 5 min und von 17 m/s für 30 min unter Kühlung bei 20°C dispergiert. Nach Zugabe von 0,856 g Graphit (Imerys, KS6L C) wurde dann weitere 30 min bei einer Umlaufgeschwindigkeit von 12 m/s gerührt. Nach Entgasen wurde die Dispersion mittels eines Filmziehrahmens mit 0,20 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet. Das mittlere Flächengewicht der trockenen Anodenbeschichtung betrug 2,90 mg/cm$^2$.

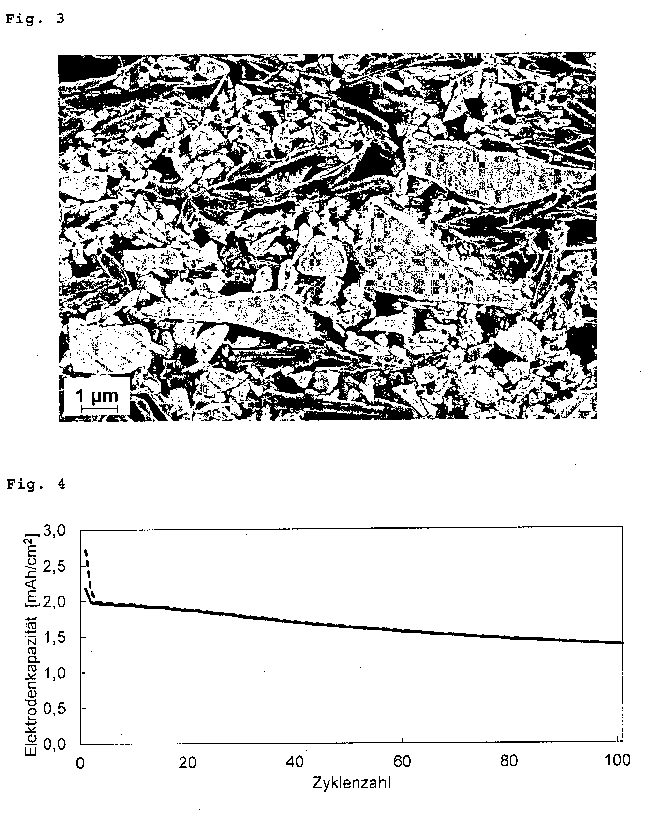

Die REM-Aufnahme des Ionenböschungsschnitts der Anodenbeschichtung ist in Fig. 3 abgebildet.

Beispiel 3 (Bsp.3):

Lithium-Ionen-Batterie mit der Anode aus Beispiel 2:
Die elektrochemischen Untersuchungen wurden an einer Knopfzelle (Typ CR2032, Hohsen Corp.) in 2-Elektroden-Anordnung durchgeführt. Die Elektrodenbeschichtung aus Beispiel 2 wurde als Gegenelektrode bzw. negative Elektrode (Dm = 15 mm) eingesetzt, eine Beschichtung auf Basis von Lithium-Nickel-Mangan-Kobaltoxid 1:1:1 mit Gehalt von 94,0 % und mittlerem Flächengewicht von 14,5 mg/cm$^2$ (bezogen von der Firma Custom Cells) als Arbeitselektrode bzw. positive Elektrode (Dm = 15 mm) verwendet. Ein mit 120 $\mu$l Elektrolyt getränktes, Glasfaser-Filterpapier (Whatman, GD Type D) diente als Separator (Dm = 16 mm). Der verwendete Elektrolyt bestand aus einer 1,0-molaren Lösung von Lithiumhexafluorophosphat in einem 3:7 (v/v) Gemisch von Fluorethylencarbonat und Ethylmethylcarbonat, welche mit 2,0 Gew.-% Vinylencarbonat versetzt war. Der Bau der Zelle erfolgte in einer Glovebox (< 1 ppm H$_2$O, O$_2$), der Wassergehalt in der Trockenmasse aller verwendeten Komponenten lag unterhalb von 20 ppm.

Die elektrochemische Testung wurde bei 20°C durchgeführt. Das Laden der Zelle erfolgte im cc/cv-Verfahren (constant current / constant voltage) mit konstantem Strom von 5 mA/g (entspricht C/25) im ersten Zyklus und von 60 mA/g (entspricht C/2) in den darauffolgenden Zyklen und nach Erreichen der Spannungsgrenze von 4,2 V mit konstanter Spannung bis Unterschreiten eines Stroms von 1,2 mA/g (entspricht C/100) bzw. 15 mA/g (entspricht C/8). Das Entladen der Zelle erfolgte im cc-Verfahren (constant current) mit konstantem Strom von 5 mA/g (entspricht C/25) im ersten Zyklus und von 60 mA/g (entspricht C/2) in den darauffolgenden Zyklen bis Erreichen der Spannungsgrenze von 3,0 V. Der gewählte spezifische Strom bezog sich auf das Gewicht der Beschichtung der positiven Elektrode.

Auf Grund der Rezeptierung in den Beispielen 2 und 3 wurde die Lithium-Ionen-Batterie durch Zellbalancing unter Teil-Lithiierung betrieben.

Fig. 4 zeigt die Lade- (gestrichelte Line) und Entladekapazität (durchgezogene Linie) einer Vollzelle auf Basis der Anodenbeschichtung aus Beispiel 2 in Abhängigkeit von der Zyklenzahl. Die Vollzelle hat im zweiten Zyklus eine reversible Anfangskapazität von 1,99 mAh/cm$^2$ und besitzt nach 60 Lade-/Entladezyklen noch 80 % ihrer ursprünglichen Kapazität.

Vergleichsbeispiel 4:

Herstellung von nanoskaligen, splitterförmigen, nicht-aggregierten Siliciumpartikeln durch Mahlung:
Analog zu Beispiel 1, jedoch mit einer Mahldauer von 600 min. Es wurden nanoskalige, splitterförmige, nicht-aggregierte Siliciumpartikel erhalten. Der Feststoffgehalt der Suspension wurde durch Zugabe von Ethanol auf 22,3 Gew.-% eingestellt.

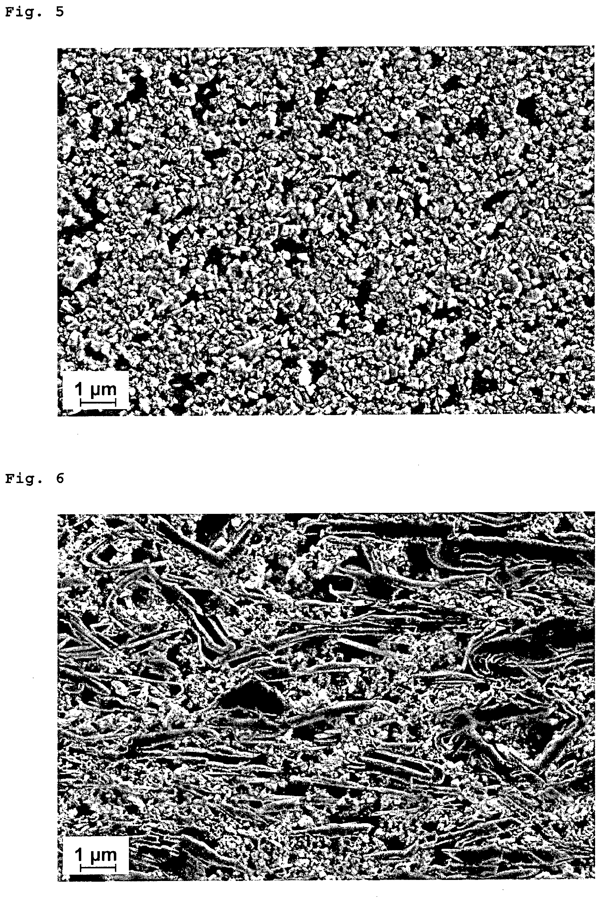

Die Messung der Partikelverteilung durch statische Laserstreuung unter Anwendung des Mie-Modells mit einem Horiba LA 950 in einer stark verdünnten Suspension in Ethanol ergab eine Größenverteilung mit $d_{10}$ = 0,09 $\mu$m, $d_{50}$ = 0,18 $\mu$m und $d_{90}$ = 0,32 $\mu$m. Die REM-Aufnahme des trockenen Si-Staubs in Fig. 5 zeigt, dass die Probe aus nanoskaligen, splitterförmigen, nicht-aggregierten Partikeln besteht.

Vergleichsbeispiel 5:

Herstellung einer Anode mit den Siliciumpartikeln aus Vergleichsbeispiel 4, Graphit, Leitruß und Binder durch physikalische Mischung:

3,03 g der 22,3 Gew.-%igen Si-Suspension in Ethanol nach Vergleichsbeispiel 4 und 0,41 g Leitruß (Imerys, Super P Li) wurden in 19,35 g einer 1,4 Gew.-%igen Lösung von Natrium-Carboxymethylcellulose (Daicel, Grade 1380) in Wasser mittels Dissolver bei einer Umlaufgeschwindigkeit von 4,5 m/s für 15 min und von 17 m/s für 45 min unter Kühlung bei 20°C dispergiert. Nach Zugabe von 2,04 g Graphit (Imerys, SFG6) wurde dann 30 min bei einer Umlaufgeschwindigkeit von 12 m/s gerührt. Nach Entgasen wurde die Dispersion mittels eines Filmziehrahmens mit 0,20 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet. Das mittlere Flächengewicht der trockenen Anodenbeschichtung betrug 2,18 mg/cm$^2$. Fig. 6 zeigt eine REM-Aufnahme eines Ionenböschungsschnitts der Anodenbeschichtung mit den nanoskaligen, splitterförmigen, nicht-aggregierten Siliciumpartikeln, zu sehen zwischen den dunkleren Graphitschollen

Vergleichsbeispiel 6 (VBsp.6):

Lithium-Ionen-Batterie mit der Anode aus Vergleichsbeispiel 5:

Die Anode mit den splitterförmigen nanoskaligen Siliciumpartikeln aus Vergleichsbeispiel 5 wurde wie in Beispiel 3 beschrieben getestet.

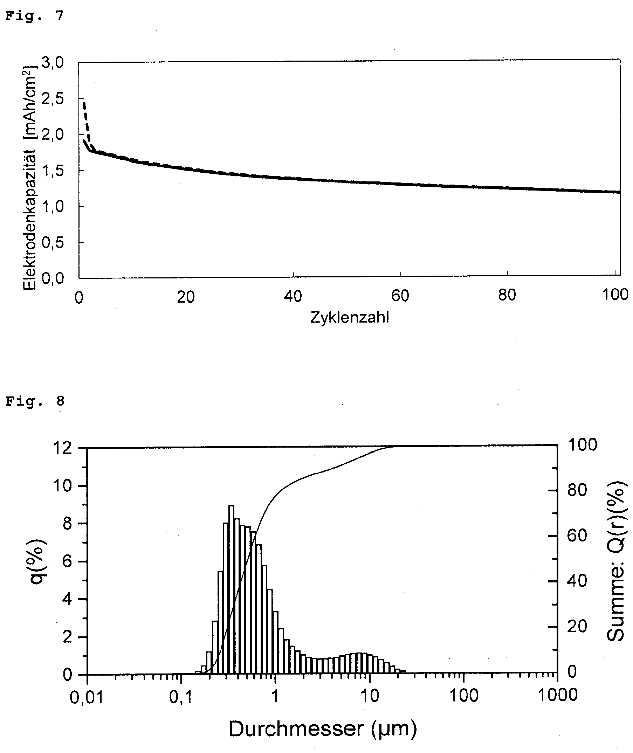

Auf Grund der Rezeptierung in Vergleichsbeispiel 5 wurde die Lithium-Ionen-Batterie unter maximaler Lithiierung betrieben. Fig. 7 zeigt die Lade- (gestrichelte Line) und Entladekapazität (durchgezogene Linie) von Vollzellen auf Basis der Anodenbeschichtung aus Vergleichsbeispiel 5 in Abhängigkeit von der Zyklenzahl. Die Vollzelle hat im zweiten Zyklus eine reversible Anfangskapazität von 1,78 mAh/cm$^2$ und besitzt schon nach 30 Lade-/Entladezyklen nur noch 80 % ihrer ursprünglichen Kapazität.

Vergleichsbeispiel 7:

Nanoskalige, aggregierte Siliciumpartikel mit bimodaler Partikelgrößenverteilung

Von nanoskaligen, aggregierten Siliciumpartikeln (bezogen von Nanostructured & Amorphous Materials, Inc.) wurde die Partikelverteilung mittels statischer Laserstreuung unter Anwendung des Mie-Modells mit dem Messgerät Horiba LA 950 in stark verdünnter Suspension in Ethanol bestimmt. Folgende Messergebnisse wurden erhalten: $d_{10}$ = 0,26 $\mu$m, $d_{50}$ = 0,50 $\mu$m und $d_{90}$ = 3,72 $\mu$m sowie einer Breite ($d_{90}$-$d_{10}$) von 3,4 $\mu$m, wie in Fig. 8 abgebildet.

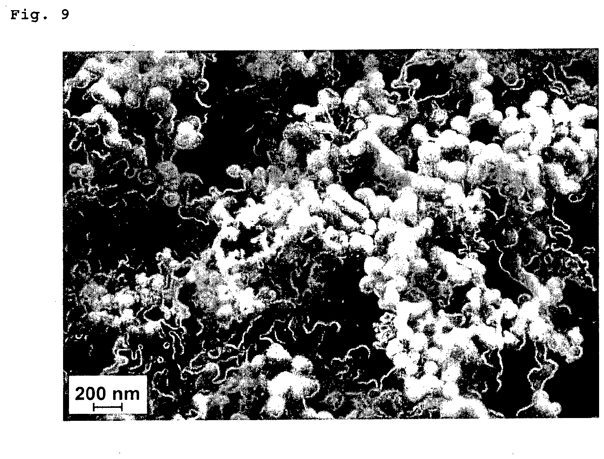

Die REM-Aufnahme des vorgenannten Pulvers in Fig. 9 zeigt, dass es sich um aggregierte, nanoskalige Siliciumpartikel mit sphärischen Primärpartikeln mit einer Größe von 70 bis 100 nm handelt.

Vergleichsbeispiel 7 belegt, dass Messungen mittels statischer Laserstreuung und daraus resultierende Partikelgrößenverteilungen, wie $d_{10}$, $d_{50}$, $d_{90}$ und $d_{90}$-$d_{10}$, keine Aussagen zur Form, Größe und Aggregationszustand der Partikel zulassen. Die statische Laserstreuung ist blind für diese Messgrößen. So kann die statische Laserstreuung nicht differenzieren zwischen nicht-aggregierten submikron-skaligen Partikeln und nanoskaligen Partikeln, die zu submikron-skaligen Einheiten aggregiert sind. Erst mit zusätzlichen REM-Aufnahmen kann diesbezüglich Klarheit geschaffen werden.

Vergleichsbeispiel 8:

Lithium-Ionen-Batterie mit Anodenmaterial enthaltend die nanoskaligen, aggregierten Siliciumpartikel aus Vergleichsbeispiel 7:
Zunächst wurde eine Anode hergestellt analog zu Beispiel 2, mit dem Unterschied, dass als Siliciumpartikel die Partikel aus Vergleichsbeispiel 7 eingesetzt wurden.

Mit der so erhaltenen Anode wurde eine Lithium-Ionen-Batterie hergestellt und ausgetestet, wie in Beispiel 3 beschrieben. Die Lithium-Ionen-Batterie von Vergleichsbeispiel 8 hat im zweiten Zyklus eine reversible Anfangskapazität von 1,82 mAh/cm$^2$ und besitzt schon nach 32 Lade-/Entladezyklen nur noch 80 % ihrer ursprünglichen Kapazität. Damit bleibt auch die Lithium-Ionen-Batterie von Vergleichsbeispiel 8 weit hinter den Leistungskennzahlen von Beispiel 3 zurück.

In Tabelle 1 sind die Austestungsergebnisse von Beispiel 3 sowie den Vergleichsbeispielen 6 und 8 zusammengefasst.

Die Lithium-Ionen-Batterie von Beispiel 3 zeigt im Vergleich zu den Lithium-Ionen-Batterien der Vergleichsbeispiele 6 und 8 überraschenderweise einen geringeren irreversiblen Kapazitätsverlust im ersten Zyklus (= höhere Anfangskapazität) und ein stabileres elektrochemisches Verhalten in den Folgezyklen.

Tabelle 1: Austestungsergebnisse der (Vergleichs)Beispiele 3, 6 und 8.

| (V) Bsp. | $d_{50}$[a] [$\mu$m] | Partikelmorphologie[a] | Li/Si-Verhältnis [molar] | Entladekapazität nach Zyklus 1 [mAh/cm$^2$] | Zyklenzahl mit ≥ 80% Kapazitätserhalt |
|---|---|---|---|---|---|
| 3 | 0,79 | splitterförmig, nicht aggregiert | 1,1[b] | 1,99 | 60 |
| 6 | 0,18 | splitterförmig, nicht aggregiert | 4,0[c] | 1,78 | 30 |
| 8 | 0,50 | sphärisch, aggregiert | 1,1[b] | 1,82 | 32 |
| a) Partikelverteilung $d_{50}$ bzw. Partikelmorphologie der Siliciumpartikel; b) Lithium-Ionen-Batterie im vollständig geladenen Zustand mit teilweise lithiiertem Anodenmaterial; c) Lithium-Ionen-Batterie im vollständig geladenen Zustand mit hoch lithiiertem Anodenmaterial. | | | | | |

**Patentansprüche**

1. Anodenmaterial für Lithium-Ionen-Batterien basierend auf Siliciumpartikeln, einem oder mehreren Bindemitteln, gegebenenfalls Graphit, gegebenenfalls einer oder mehreren weiteren elektrisch leitenden Komponenten und gegebenenfalls einem oder mehreren Additiven, **dadurch gekennzeichnet, dass** die Siliciumpartikel nicht aggregiert sind und eine volumengewichtete Partikelgrößenverteilung zwischen den Durchmesser-Perzentilen 10 $\mu$m ≥ $d_{10}$ ≥ 0,2 $\mu$m und $d_{90}$ ≤ 20,0 $\mu$m sowie $d_{50}$ von 0,5 bis 10,0 $\mu$m und eine Breite $d_{90}$-$d_{10}$ ≤ 15 $\mu$m haben (bestimmt durch statische Laserstreuung unter Anwendung des Mie-Modells mit dem Messgerät Horiba LA 950 mit Ethanol als Dispergiermedium für die Siliciumpartikel), wobei der Siliciumanteil im Anodenmaterial zwischen 40 Gew.-% und 95 Gew.-% liegt, bezogen auf das Gesamtgewicht des Anodenmaterials.

2. Anodenmaterial nach Anspruch 1, **dadurch gekennzeichnet, dass** die Siliciumpartikel eine volumengewichtete Partikelgrößenverteilung mit Durchmesser-Perzentilen $d_{10}$ von ≤ 5 $\mu$m haben.

3. Anodenmaterial nach Anspruch 1 oder 2, **dadurch gekennzeichnet, dass** die Siliciumpartikel eine volumengewichtete Partikelgrößenverteilung mit Durchmesser-Perzentilen $d_{90}$ von ≥ 0,5 $\mu$m haben.

4.  Anodenmaterial nach Anspruch 1 bis 3, **dadurch gekennzeichnet, dass** die Siliciumpartikel eine volumengewichtete Partikelgrößenverteilung mit einer Breite $d_{90}$-$d_{10}$ von $\geq 0{,}6$ $\mu$m haben.

5.  Anodenmaterial nach Anspruch 1 bis 4, **dadurch gekennzeichnet, dass** die Siliciumpartikel eine volumengewichtete Partikelgrößenverteilung mit Durchmesser-Perzentilen $d_{50}$ von 0,6 bis 7,0 $\mu$m haben.

6.  Anodenmaterial nach Anspruch 1 bis 5, **dadurch gekennzeichnet, dass** die Siliciumpartikel eine Sphärizität von $0{,}3 \leq \psi \leq 0{,}9$ haben.

7.  Anodenmaterial nach Anspruch 1 bis 6, **dadurch gekennzeichnet, dass** die Siliciumpartikel erhältlich sind durch Mahlprozesse.

8.  Anodenmaterial nach Anspruch 1 bis 7, **dadurch gekennzeichnet, dass** die Bindemittel Polyacrylsäure oder Polymethacrylsäure oder deren Alkalisalze umfassen.

9.  Verwendung des Anodenmaterials aus Anspruch 1 bis 8 für die Herstellung von Lithium-Ionen-Batterien.

10. Lithium-Ionen-Batterien umfassend eine Anode basierend auf dem Anodenmaterial aus Anspruch 1 bis 8.

11. Lithium-Ionen-Batterien gemäß Anspruch 10, **dadurch gekennzeichnet, dass** die Lithium-Ionen-Batterien so betrieben werden, dass das Anodenmaterial in der vollständig geladenen Batterie nur teilweise lithiiert ist.

12. Lithium-Ionen-Batterien gemäß Anspruch 11, **dadurch gekennzeichnet, dass** im teilweise lithiierten Anodenmaterial der vollständig geladenen Batterie das Verhältnis der Lithiumatome zu den Siliciumatomen $\leq 2{,}2$ beträgt.

13. Lithium-Ionen-Batterien gemäß Anspruch 11, **dadurch gekennzeichnet, dass** die Kapazität des Siliciums des Anodenmaterials der Lithium-Ionen-Batterie zu $\leq 50\%$ genutzt wird, bezogen auf die maximale Kapazität von 4200 mAh pro Gramm Silicium.

14. Verfahren zum Betreiben von Lithium-Ionen-Batterien des Anspruchs 10, **dadurch gekennzeichnet, dass** das Anodenmaterial in der vollständig geladenen Lithium-Ionen-Batterie nur teilweise lithiiert wird.

**Claims**

1.  Anode material for lithium ion batteries which is based on silicon particles, one or more binders, optionally graphite, optionally one or more further electrically conductive components and optionally one or more additives, **characterized in that** the silicon particles are unaggregated and have a volume-weighted particle size distribution between the diameter percentiles 10 $\mu$m $\geq d_{10} \geq 0.2$ $\mu$m and $d_{90} \leq 20.0$ $\mu$m and also a $d_{50}$ of from 0.5 to 10.0 $\mu$m and breadth $d_{90}$-$d_{10} \leq 15$ $\mu$m (determined by static laser light scattering using the Mie model by means of the measuring instrument Horiba LA 950 with ethanol as dispersing medium for the silicon particles), wherein the proportion of silicon in the anode material is in the range from 40% by weight to 95% by weight, based on the total weight of the anode material.

2.  Anode material according to Claim 1, **characterized in that** the silicon particles have a volume-weighted particle size distribution with diameter percentiles $d_{10}$ of $\leq 5$ $\mu$m.

3.  Anode material according to Claim 1 or 2, **characterized in that** the silicon particles have a volume-weighted particle size distribution with diameter percentiles $d_{90}$ of $\geq 0.5$ $\mu$m.

4.  Anode material according to any of Claims 1 to 3, **characterized in that** the silicon particles have a volume-weighted particle size distribution having a breadth $d_{90}$-$d_{10}$ of $\geq 0.6$ $\mu$m.

5.  Anode material according to any of Claims 1 to 4, **characterized in that** the silicon particles have a volume-weighted particle size distribution with diameter percentiles $d_{50}$ of from 0.6 to 7.0 $\mu$m.

6.  Anode material according to any of Claims 1 to 5, **characterized in that** the silicon particles have a sphericity of $0.3 \leq \psi \leq 0.9$.

**7.** Anode material according to any of Claims 1 to 6, **characterized in that** the silicon particles are obtainable by milling processes.

**8.** Anode material according to any of Claims 1 to 7, **characterized in that** the binders comprise polyacrylic acid or polymethacrylic acid or the alkali salts thereof.

**9.** Use of the anode material according to any of Claims 1 to 8 for producing lithium ion batteries.

**10.** Lithium ion battery comprising an anode based on the anode material of any of Claims 1 to 8.

**11.** Lithium ion battery according to Claim 10, **characterized in that** the lithium ion battery is operated in such a way that the anode material is only partially lithiated in the fully charged battery.

**12.** Lithium ion battery according to Claim 11, **characterized in that** the ratio of lithium atoms to silicon atoms in the partially lithiated anode material of the fully charged battery is $\leq 2.2$.

**13.** Lithium ion battery according to Claim 11, **characterized in that** the capacity of the silicon of the anode material of the lithium ion battery is utilized to an extent of $\leq 50\%$, based on the maximum capacity of 4200 mAh per gram of silicon.

**14.** Method for operating lithium ion batteries of Claim 10, **characterized in that** the anode material is only partially lithiated in the fully charged lithium ion battery.

**Revendications**

**1.** Matériau d'anode pour batteries lithium-ion à base de particules de silicium, d'un ou de plusieurs liants, éventuellement de graphite, éventuellement d'un ou de plusieurs composants électriquement conducteurs supplémentaires et éventuellement d'un ou de plusieurs additifs, **caractérisé en ce que** les particules de silicium ne sont pas agrégées et ont une distribution des tailles de particules pondérée en volume entre les centiles de diamètre 10 $\mu$m $\geq$ d$_{10}$ $\geq$ 0,2 $\mu$m et d$_{90}$ $\leq$ 20,0 $\mu$m, ainsi que d$_{50}$ de 0,5 à 10,0 $\mu$m, et une largeur d$_{90}$-d$_{10}$ $\leq$ 15 $\mu$m (déterminée par diffusion laser statique en utilisant le modèle Mie avec l'appareil de mesure Horiba LA 950 avec de l'éthanol en tant que milieu de dispersion pour les particules de silicium), la proportion de silicium dans le matériau d'anode étant comprise entre 40 % en poids et 95 % en poids, par rapport au poids total du matériau d'anode.

**2.** Matériau d'anode selon la revendication 1, **caractérisé en ce que** les particules de silicium ont une distribution des tailles de particules pondérée en volume ayant des centiles de diamètre d$_{10}$ $\leq$ 5 $\mu$m.

**3.** Matériau d'anode selon la revendication 1 ou 2, **caractérisé en ce que** les particules de silicium ont une distribution des tailles de particules pondérée en volume ayant des centiles de diamètre d$_{90}$ $\geq$ 0,5 $\mu$m.

**4.** Matériau d'anode selon les revendications 1 à 3, **caractérisé en ce que** les particules de silicium ont une distribution des tailles de particules pondérée en volume ayant une largeur d$_{90}$-d$_{10}$ $\geq$ 0,6 $\mu$m.

**5.** Matériau d'anode selon les revendications 1 à 4, **caractérisé en ce que** les particules de silicium ont une distribution des tailles de particules pondérée en volume ayant des centiles de diamètre d$_{50}$ de 0,6 à 7,0 $\mu$m.

**6.** Matériau d'anode selon les revendications 1 à 5, **caractérisé en ce que** les particules de silicium ont une sphéricité de 0,3 $\leq$ $\psi$ $\leq$ 0,9.

**7.** Matériau d'anode selon les revendications 1 à 6, **caractérisé en ce que** les particules de silicium peuvent être obtenues par des procédés de broyage.

**8.** Matériau d'anode selon les revendications 1 à 7, **caractérisé en ce que** les liants comprennent de l'acide polyacrylique ou de l'acide polyméthacrylique ou leurs sels alcalins.

**9.** Utilisation du matériau d'anode selon les revendications 1 à 8 pour la fabrication de batteries lithium-ion.

**10.** Batteries lithium-ion comprenant une anode à base du matériau d'anode selon les revendications 1 à 8.

**11.** Batteries lithium-ion selon la revendication 10, **caractérisées en ce que** les batteries lithium-ion sont exploitées de telle sorte que le matériau d'anode ne soit que partiellement lithié dans la batterie entièrement chargée.

**12.** Batteries lithium-ion selon la revendication 11, **caractérisées en ce que**, dans le matériau d'anode partiellement lithié de la batterie entièrement chargée, le rapport entre les atomes de lithium et les atomes de silicium est $\leq 2,2$.

**13.** Batteries lithium-ion selon la revendication 11, **caractérisées en ce que** la capacité du silicium du matériau d'anode de la batterie lithium-ion est utilisée à $\leq 50$ %, par rapport à la capacité maximale de 4200 mAh par gramme de silicium.

**14.** Procédé d'exploitation de batteries lithium-ion selon la revendication 10, **caractérisé en ce que** le matériau d'anode n'est que partiellement lithié dans la batterie lithium-ion entièrement chargée.

Fig. 1

Fig. 2

Fig. 3

Fig. 4

Fig. 5

Fig. 6

Fig. 7

Fig. 8

Fig. 9

200 nm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1730800 A
- WO 2014202529 A
- US 2003235762 A
- US 2009305129 A
- DE 102013211388
- DE 102013215257
- GB 2498803 A
- US 20050214646 A
- JP 4911835 B
- US 2003113613 A

**In der Beschreibung aufgeführte Nicht-Patentliteratur**

- **M. GAUTHIER.** *Journal of Power Sources,* 2014, vol. 256, 32-36